# EUROPEAN PATENT APPLICATION

(11) **EP 2 610 508 A1**
(43) Date of publication of application: **03.07.2013**
(21) Application number: 11195911.0
(22) Date of filing: 28.12.2011
(51) Int. Cl.: F16C 19/38, F16C 33/46, F16C 33/51, F16C 19/18, F16C 33/38, F16C 25/08

(54) **Rolling element bearing**

(71) Applicant: Siemens Aktiengesellschaft, 80333 München (DE)
(72) Inventor: Soerensen, Steffen, 8382 Hinnerup (DK); Stiesdal, Henrik, 5000 Odense C (DK)

(57) **Abstract**

The invention relates to a rolling element type bearing, a bearing cage to be used in this bearing and to a wind turbine.

The bearing cage (1) comprises a frame (2) that at least partially surrounds a rolling element (15) of a bearing (10). The frame (2) comprises at least two cross-bars (3) and at least two side-bars (4). The side-bars (4) connect the cross-bars (3). The frame (2) comprises an elastic element (5, 6), that deforms elastically when a force is acting on the bearing cage (1) due to the movement of the rolling elements (15) in the bearing (10).

## Description

The invention relates to a rolling element type bearing, a bearing cage to be used in this bearing and to a wind turbine.

A bearing comprises a first bearing shell, a second bearing shell and a rolling element that is arranged between the first and the second bearing shell. The rolling elements separate the bearing shells and move along a raceway of the bearing shells when the bearing is in use. The rolling element is held and guided in a bearing cage.

The bearing cage is used in a bearing to maintain a certain distance between two adjacent rolling elements in the bearing. In addition it enables the movement of the rolling elements. Rolling elements, that are in the load zone, move due to the rotation of the bearing and roll along the raceway. Rolling elements that are not within the load zone are not moved by the rotation of the bearing. In this case the bearing cage helps to move the rolling elements in the bearing.

A bearing cage surrounds one, some or all rolling elements present in the bearing. A bearing cage provides a chamber for each rolling element that is open towards the raceways, so that the rolling element can get in contact with the raceways and can move along the raceways. A bearing cage comprises at least two cross-bars that are arranged mainly parallel to the axis of rotation of the rolling element. And it comprises two side-bars that connect the crossbars at their ends.

The bearing cage must be guided to maintain a predefined position of the chamber between the surfaces of the bearing shells. When the bearing cage surrounds two or more rolling elements, the bearing cage can be guided by the rolling elements. The bearing cage has a certain shape of the inner surface of its chamber that is in contact with the rolling element. The shape of the surface ensures that the rolling element can not slide out of the chamber at its open ends. So the position of the chamber and the rolling element are fixed in respect to each other. Thus the bearing cage can not slide towards one of the surfaces of the bearing shells.

To achieve this, the bearing cage must be machined within narrow tolerances and would typically be machined of steel, brass or bronze. This shows the disadvantage that the material is very cost expensive. In addition the cage must be machined out of a full piece. This leads to a loss of material and is time consuming and labor intensive.

The second solution to guide the bearing cage is to manufacture a cage that can be made of plastic and is completely or partially guided by noses that are in contact to the raceway and slide along the raceway when the bearing is in use.

EP1408248 describes a bearing cage for a roller bearing that is made of a plastic material and comprises several segments. The cross-bars of the cage comprise noses to guide the segments on the raceway of the roller bearing.

This shows the disadvantage that it is possible that a relative movement between the segments of the bearing cage occurs. This relative movement can be a movement in the direction of the movement of the rolling elements in the bearing, due to small gaps between two adjacent bearing cages. This is called a tangential movement of the bearing cages relative to each other.

The movement can also be a movement in the direction of the axis of rotation of the rolling elements. This movement is called an axial movement of the bearing cages. The bearing cages move in the direction of the axis of rotation of the rolling elements. This movement often occurs in tapered roller bearings, where the bearing cages with the rolling elements move axially outward to the rim of the bearing due to the load transferred by the bearing.

Another movement that can occur is a radial movement. The bearing cage is moving radial inward or outward in respect to the rotation of the bearing towards the surface of the bearing shells. This movement can lead to a contact between the bearing cage and the surface of the bearing shell and have a negative effect on the lubrication of the bearing. Radial movement can lead to higher friction in the bearing and to higher wear.

The movement can also be a combination of the above mentioned directions of movement and comprise elements of two or all three directions described. The relative movement shows then tangential, axial and/or radial components.

A movement of the bearing cages relative to each other is unwanted as it leads to higher wear and higher fatigue in the bearing, thus shortening the live-time of the bearing and increasing maintenance and replacement costs.

It is the aim of the invention to provide a bearing with an improved bearing cage.

The aim is reached by the features of the independent claim. Preferred embodiments of the invention are described in the dependent claims.

A bearing comprises a first bearing shell with a first surface and a second bearing shell with a second surface. At least one rolling element is arranged between the bearing shells in a way, that the rolling element is in contact with a part of the first surface and while the rolling element is in contact with a part of the second surface when the bearing is used. A bearing cage is prepared to maintain a certain predetermined distance between two adjacent rolling elements and to guide the rolling elements in the bearing. The bearing cage comprises a frame that is prepared to at least partially surround a rolling element of a bearing. The frame comprises at least two cross-bars and at least two side-bars. The side-bars connect the cross-bars. The frame comprises an elastic element that is arranged and prepared to deform elastically when a force is acting on the bearing cage due to the movement of the rolling elements in the bearing.

Rolling elements that are arranged in a bearing as described roll along the first and second surface when the bearing is in use. In addition there is an unwanted movement of the rolling elements in the bearing. This unwanted movement can be an axial movement, mainly in the direction of the axis of rotation of the rolling elements. This movement can develop due to load transferred by the bearing.

The axial movement leads to a collision of the bearing cage with the bearing shells or other parts of the bearing that are prepared to guide the bearing cage. This leads to a high acceleration of the rolling elements and the bearing cage and thus to higher friction and higher wear in the bearing. In the case of a roller bearing, an axial movement of the roller along the surface of the bearing shell leads to a high friction and intensive wear in the bearing.

The unwanted movement of the rolling elements can also be a tangential movement due to gaps between the segments of a segmented bearing cage. The rolling elements in the bearing that are in the load zone of the bearing are moved along the surfaces of the bearing shells due to the rotation of the bearing. The rolling elements that are not in the load zone are moves along the surfaces of the bearing shells by being pushed by the bearing cage. The bearing cage segment in the load zone is moving along until it gets in contact with the next bearing cage segment and then pushes this segment. The bearing cage segments can also be moved by the influence of gravitational forces.

If there is a gap between two adjacent bearing cage segments, the moving bearing cage hits the other bearing cage which results in a high acceleration of the bearing cage comprising the rolling elements. This can lead to a higher friction in the bearing and higher wear. In addition this acceleration can cause a jerky movement of the bearing cages. This jerky movement can also lead to an oscillation of the rolling elements in the bearing.

The collision of two bearing cages leads to a high acceleration in the bearing cage and thus leads to a higher friction and wear in the bearing.

The third type of unwanted movement is a radial movement mainly of the bearing cage that moves along the rolling element towards the surface of the bearing shells. Rolling elements can also show a radial movement, especially when they are not in the load zone. The rolling elements can completely or partially loose the contact to one of the surfaces of the bearing shells. When they get in complete contact again they can hit the surface. This results in an impact on the surface that leads to high forces at the place of the impact that can damage the rolling element and the surface. This can lead to higher wear in the bearing and shorten the live-time of the bearing.

Thus unwanted movement of the rolling elements in the bearing and in addition the unwanted movement of the bearing cage has to be reduced or completely avoided.

To reduce this movement the bearing cage is equipped with an elastic element. This elastic element is flexing when a force is acting on it and is providing a counteracting force. Thus a contact of two adjacent bearing cages or of one bearing cage and the bearing shells or other parts of the bearing will happen at the elastic element.

At the force of the contact the elastic element is flexing and providing a counterforce. The force of the contact is thus softened by the elasticity of the elastic element. In addition an oscillating movement can be avoided or changed in frequency.

Thus a high acceleration of the rolling elements is reduced. Thus the friction is reduced. Thus the wear is reduced. Thus the necessity to exchange part is reduced. Thus the service time can be reduced and the service interval can be enlarged. Thus the costs of service and the exchange of spare parts can be reduced. Thus the life-time of the bearing is increased.

In a preferred embodiment the elastic element is prepared to provide a certain pre-load to reduce at least a part of the force and to stabilize the position of the bearing cage in the bearing.

In addition the bearing cage can be installed in the bearing with a force acting on the elastic element. For example the segments of a bearing cage are installed in a way that all the segments act with a certain force on the elastic element of the adjacent segment. So the elastic element is already flexed when the bearing cage is installed in a bearing.

The segments of the bearing cage are under a certain preload then. The preload reduces the tangential movement of the segments of the bearing cage. In addition the remaining tangential movement is softened due to the elastic elements. Thus the forces acting on the rolling elements due to the tangential movement are reduced. Thus the friction in the bearing is reduced. Thus the wear and fatigue is reduced. Thus the life-time of the bearing is increased. Thus the service interval can be enlarged. Thus the costs of service and of the exchange parts are reduced.

In a preferred embodiment at least one side-bar comprises the elastic element to counteract axial forces acting between the bearing and the bearing cage and to provide a certain preload in axial direction of the bearing to reduce an axial movement of the bearing cage relative to the bearing shells.

In this embodiment the side-bar of the bearing cage comprises an elastic element that is acting on the bearing shells or other parts of the bearing.

Thus the impact of the bearing cage hitting a part of the bearing while performing an axial movement can be reduced. Thus the wear is reduced. Thus the life-time of the bearing is increased.

The bearing cage can be installed in a way that an elastic element at the side of the bearing cage is under a certain tension. In this cage the width of the opening guiding the bearing cage is smaller then the width of the bearing cage including the width of the elastic element in a non-flexed position. To install the bearing cage the elastic element needs to be flexed. The bearing cage with the elastic element is under a certain pre-load then.

Thus the bearing cage is held in a certain position in respect to the bearing shells. Thus a certain force is pushing the bearing cage into a certain direction and into a certain position.

Thus jerky movements and hard impacts of the bearing cage at other parts of the bearing are avoided. Thus the wear in the bearing is reduced. Thus the life-time of the bearing is increased.

In a preferred embodiment the frame comprises the elastic element to counteract radial forces acting on the bearing cage and to provide a certain preload in radial direction of the bearing to reduce a radial movement of the bearing cage relative to the bearing shells.

The cross-bars or the side-bars of the frame of the bearing cage comprise elastic elements that act on the surface of the bearing shells. Thus the radial movement of the bearing cage or the rolling elements is reduced. In addition the forces of an impact of a rolling element or the bearing shell are reduced. Thus the wear in the bearing is reduced. Thus the life-time of the bearing is increased.

In addition the elastic element hinders the bearing cage to get in contact with the surface of the bearing shells. Thus the lubrication present on the surface of the bearing shell is not disturbed by the bearing cage sliding along the surface. Thus the lubrication is improved. Thus the wear is reduced.

The elastic element can contact the surface of the bearing shell within or outside of the raceways of the rolling element in the bearing.

In a preferred embodiment at least one cross-bar comprises the elastic element to counteract tangential forces acting between two adjacent bearing cages and to provide a certain preload between two adjacent bearing cages of the bearing to minimize a tangential movement of the bearing cages relative to each other.

The segments of the bearing cage get in contact to each other at the cross-bars at their front end and trailing end. In this embodiment the cross-bar at one of the ends of the bearing cage comprises an elastic element. Thus the segments of the bearing cage get in contact to the adjacent segment at their cross-bar abutting on the elastic element of the adjacent segment.

Thus the force of the impact of one segment hitting the adjacent segment is reduced by the flexibility of the elastic element. Thus the friction is reduced. Thus the wear is reduced. Thus the life-time is increased.

In a preferred embodiment the frame comprises a gap and at least a part of the cross-bar is acting as an elastic element.

The cross-bar at one end of the bearing cage is acting as an elastic element. The cross-bar is at one end separated from the frame of the bearing cage to be capable of flexing elastically.

Thus the cross-bar is used as an elastic element. Thus no additional elastic element has to be provided at the cross-bar. Thus material is saved. In addition steps in the production process are saved. Thus production time is saved.

In a preferred embodiment the side-bar of the bearing cage comprises a constriction to enhance the elasticity of the elastic element.

The construction is a restriction in the material of the side-bar. This constriction changes the elastic properties of the side-bar. Thus it changes the elastic properties of the cross-bar that is attached to the side-bar.

The constriction can be designed in a way to reach a certain predetermined elasticity or flexibility of the cross-bar. Thus the elasticity can be influenced independent from the material and cross-shape of the side-bar. Thus the side-bar can be build with a material and with a cross-shape suitable for the purpose of the side-bar. Thus the elastic properties of the cross-bar can be designed independent from the given properties of a normal unconstructed side-bar.

In a preferred embodiment the bearing cage is molded with a thermoplastic material.

The thermoplastic material can be a high grade fiber reinforced thermoplastic, for example, such as PEEK.

Thus the bearing cage is light weight. Thus no heavy machinery is needed for installation or exchange of the bearing cage.

In addition the material and the manufacturing of the bearing cage are inexpensive.

The bearing cage can be molded or casted in one piece. Thus production time and installation time is saved.

In a preferred embodiment the bearing is a roller bearing.

Roller bearings have a very large contact area between the rolling elements and the surfaces of the bearing shells.

Rollers are used in bearings that transfer a high load. A movement of the rolling elements including the bearing cage in axial, radial or tangential direction leads to a higher friction in the bearing. Especially in a bearing that transfers a high load, this leads to an excessive higher wear in the bearing. A higher wear in the bearing leads to a shorter service interval and can lead to failure in the bearing.

By using a bearing with a bearing cage invented, a higher wear is avoided. Thus the service interval is enlarged. Thus the costs of service are reduced.

In addition the possibility of a failure of the bearing is reduced. Thus the costs of repair of the bearing and of exchanging parts are reduced.

In a preferred embodiment the bearing is a tapered bearing.

Tapered bearings are used in situations where the bearing has to transfer high bending moments. Especially in tapered bearing the rolling elements tent to move axially toward the outer part of the bearing shell in the bearing. This leads to higher friction and thus higher wear in the bearing. This leads to more failures in the bearing and higher costs for maintenance and service.

Especially in a bearing that transfers a high load and/or high bending moments, additional friction and wear due to axial, radial or tangential movement of the rolling elements has to be avoided.

By using a bearing cage as described an excessive movement, especially jerky movement of the rolling elements can be reduced or avoided.

Thus higher friction in the bearing can be avoided. Thus higher wear in the bearing can be avoided. Thus costs for service and maintenance and also the time needed for service can be reduced.

A Bearing cage comprises a frame that is prepared to at least partially surround a rolling element of a bearing, to guide the rolling element in a bearing and to maintain a certain predetermined distance between two adjacent rolling elements. The frame comprises at least two cross-bars and at least two side-bars. The side-bars connect the cross-bars at their ends. The frame is prepared to at least partially surround at least one rolling element. The frame comprises an elastic element that is arranged and prepared to deform elastically when a force is acting on the elastic element.

To reduce unwanted movement of the bearing cage, the bearing cage is equipped with an elastic element. This elastic element is flexing when a force is acting on it and is providing a counteracting force. Thus a contact of two adjacent bearing cages or of one bearing cage and the bearing shells or other parts of the bearing will happen at the elastic element.

At the force of the contact the elastic element is flexing and providing a counterforce. The force of the contact is thus softened by the elasticity of the elastic element. In addition an oscillating movement can be avoided or changed in frequency.

Thus a high acceleration of the rolling elements is reduced. Thus the friction is reduced. Thus the wear is reduced. Thus the necessity to exchange part is reduced. Thus the service time can be reduced and the service interval can be enlarged. Thus the costs of service and the exchange of spare parts can be reduced. Thus the life-time of the bearing is increased.

A wind turbine comprises a bearing as described.

Bearings are an important part in wind turbines. When low friction is provided in the bearings, the bearings can run for a longer time until the next service is necessary. Thus the service interval can be enlarged. Thus service time is saved. Thus the energy production of the wind turbine is increased.

Especially wind turbines that are installed offshore can not be reached very easily. Reliability is very important for these wind turbines. When reduced friction and wear can be provided, the reliability of the bearing is increased. Thus the break down time of the wind turbine is reduced. Thus the energy production is increased. And also maintenance costs are reduced.

In a preferred embodiment the wind turbine is a direct driven wind turbine.

Direct driven wind turbines comprise bearings that run with a very low speed and have to transfer high loads, as bending moments. In this case it is very important to reduce unwanted radial, axial or tangential movement of the rolling elements, to reduce friction and wear in the bearing.

With the bearing and bearing cage invented the wear is reduced. Thus especially in a direct driven wind turbine the reliability of the bearing is increased. Thus the efficiency of the wind turbine is increased. Thus the cost of energy production is lowered.

In a construction of a wind turbine where one bearing is used as a main bearing, this one main bearing transfers all the loads of the rotor. These are radial loads, axial loads and bending moments. In this case a smooth operation of the bearing with reduced unwanted movements of the rolling elements is necessary. Also additional friction in the bearing should be avoided to reduce the loss of energy transferred and reduce warming and wear of the bearing. With the bearing described the friction is significantly reduced. Thus the reliability of the wind turbine is improved. Thus the efficiency of the wind turbine is improved. Thus the energy production is increased. Thus the costs of the energy produced are reduced.

The invention is shown in more detail by help of figures. The figures show a preferred configuration and do not limit the scope of the invention.
- FIG 1: shows a bearing cage as described.
- FIG 2: shows another embodiment of the bearing cage described.
- FIG 3: shows an arrangement of two bearing cages as described.
- FIG 4: shows a third embodiment of the bearing cage described.
- FIG 5: shows a tapered roller bearing with a bearing cage of one of the embodiments.

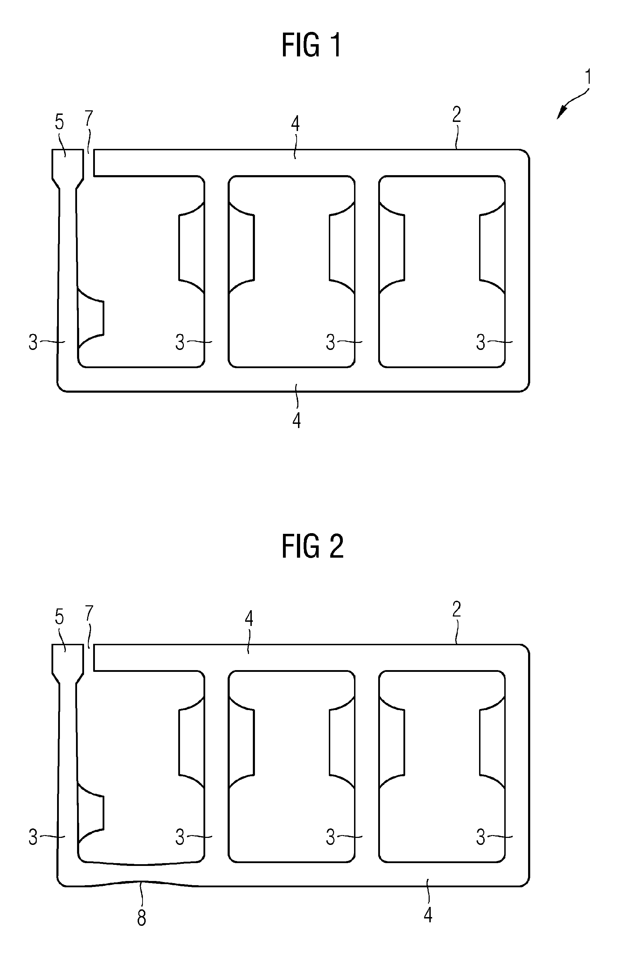

FIG 1 shows a bearing cage as described.

The bearing cage 1 comprises a frame 2 that provides openings for rolling elements. Rolling elements can be placed in the openings, where they are guided by the bearing cage when the bearing cage and the rolling elements are installed in a bearing and the bearing is in use.

The frame 2 of the bearing cage comprises four cross-bars 3 and two side-bars 4. The cross-bars 3 maintain a certain predetermined distance between the rolling elements when the bearing is in use. The side-bars 4 connect the cross-bars 3. The last cross-bar 3 is at its end separated from the side-bar 4 by gap 7, which is an opening in the frame 2. This cross-bar 3 serves as an elastic element 5.

If a force is present that acts on the elastic element 5, shown on the left side of the frame 2, the elastic element 5 will flex inwards towards the rest of the frame 2, narrowing the gap 7 and eventually closing the gap 7. This cross-bar 3, used as an elastic element 5, is elastically, so that it can readily flex when a force is present and can flex back to its original position when the force is not present any more.

By flexing elastically, the cross-bar provides a counter force that neutralizes the force acting on the elastic element 5. This leads to a certain tension in the elastic element 5. The elastic element 5 can be used to achieve a certain preload by applying a force on the elastic element 5, the flexing cross-bar.

FIG 2 shows another embodiment of the bearing cage 1 described.

FIG 2 shows a bearing frame similar to the one in Fig 1. In addition the side-bar 4, where the elastic element 5 is attached to comprises a constriction 8. The constriction 8 is a narrowing in the material of the frame 2. The constriction 8 influences the elastic properties of the elastic element 5.

The elastic element 5 is the cross-bar on the left side of the bearing cage 1 and is attached to the side-bar 4 at one side and shows a gap 7 towards the other side-bar 4. When a force is acting on the elastic element 5 towards the frame, the elastic element 5 is flexing inward towards the rest of the bearing cage 1, narrowing and eventually closing the gap 7.

The flexibility of the elastic element 5 depends on the material and the dimensions of the elastic element 5 and a part of the side-bar 4. The bigger the area of the cross section of the elastic element 5 and the side-bar 4 the higher the flexural modulus of elasticity. A constriction in the cross section will lower the flexural modulus of elasticity. The elasticity of the elastic element 5 can be influenced by changing the area of the cross section of the side-bar 4. In this embodiment the side-bar 4 shows a constriction 8 to lower the flexural modulus of elasticity.

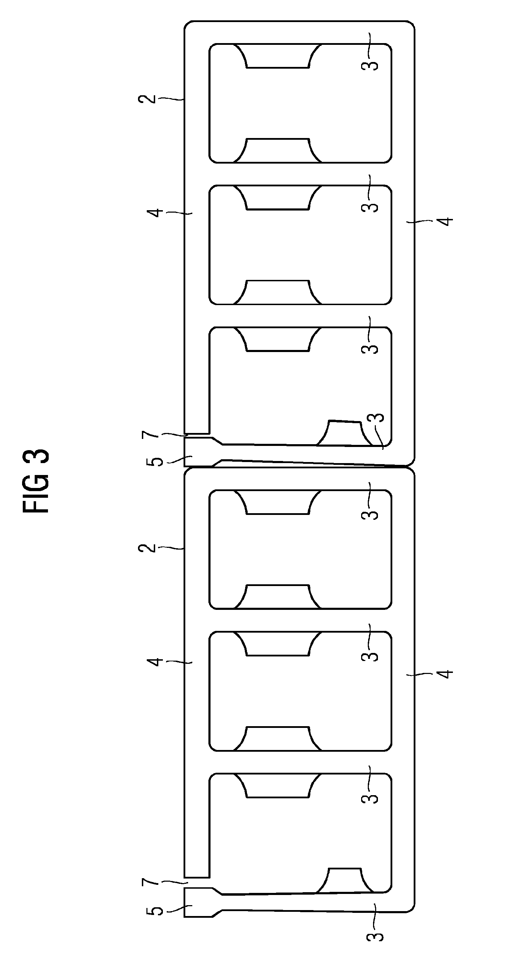

FIG 3 shows an arrangement of two bearing cages 1 as described.

FIG 3 shows two bearing cages 1 in an arrangement as they are usually arranged in a bearing. The two bearing cages 1 are segments of a bearing cage used for a bearing. The two segments are arranged in a row, one after the other.

When the bearing is in use, some rolling elements in the bearing are in the so called load zone, where they are driven by the rotation of the bearing. Other rolling elements are out of the load zone and are not driven by the rotation of the bearing. These rolling elements are moved by a bearing cage. The bearing cage in this case is pushed by the neighboring bearing cage and so on. This chain goes until the load zone. There the bearing cages are driven by the rolling element.

When one bearing cage is pushing another bearing cage this can be an uneven movement. Small gaps are present between two adjacent bearing cages that lead to impacts of one bearing cage hitting another. These impacts lead to an uneven movement of the bearing cages and the rolling elements and lead to a higher wear in the bearing.

To avoid hard impacts, the frames 2 of the bearing cages 1 are equipped with an elastic element 5. When one bearing cage is hitting the adjacent bearing cage, the elastic element 5 will flex toward the rest of the bearing cage 1 and provide a force towards the other bearing cage. This softens the impact of one bearing cage 1 to another.

When all segments of bearing cages 1 are equipped with an elastic element 5 the segments can be installed in the bearing with a certain preload, so that there are no gaps between the bearing cages 1. The bearing cages then abut directly on each other and the force of the elastic element 5 provides a certain tension in the ring of bearing cages that helps to soften the impacts of the bearing cages.

In the figure the left bearing cage 1 abuts on the right bearing cage 1 with a certain force. The elastic element 5 of the right bearing cage 1 is flexing towards the rest of its bearing cage. The gap 7 at the right bearing cage 1 is reduced due to the flexing of the elastic element 5. Eventually the gap 7 can also close completely. The elastic element 5 of the right bearing cage 1 is providing a certain force that pushed against the left bearing cage 1.

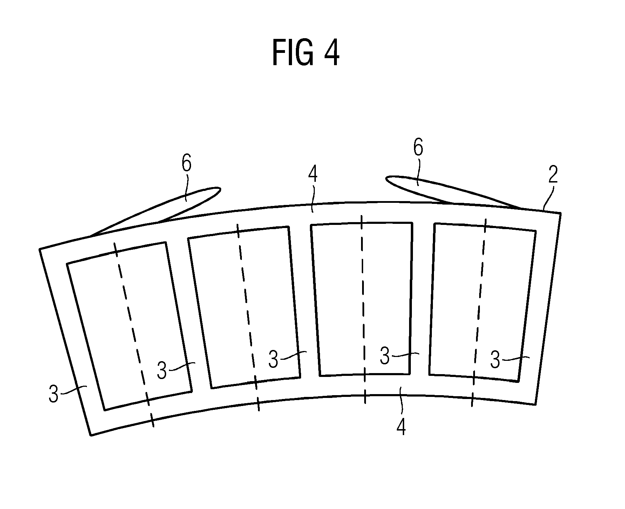

FIG 4 shows a third embodiment of the bearing cage described.

FIG 4 shows a frame 2 of a bearing cage 1 for four rolling elements. The frame 2 shows five cross-bars 3 and two side-bars 4. Elastic elements 6 are provided at one of the side-bars 4. In this case two elastic elements 6 are attached at the side of the side-bar 4.

The elastic elements 6 respond to a force acting on them from the side of the frame 2. This force can arise from a part of the bearing shell that is guiding the bearing cage to limit an axial movement of the bearing cage.

In a bearing where the bearing cage abuts on the bearing shell or a bearing housing with its sides, on both sides a small gap between the side-bars 4 and the bearing shell is needed to avoid extensive friction and wear in the bearing. Due to this gap an axial movement of the bearing cage is possible. This movement can lead to an uneven movement of the rolling elements. This again leads to higher wear in the bearing.

A bearing cage that comprises elastic elements 6 as described here abuts on the bearing shell or the bearing housing at one side. On the other side the elastic elements 6 abut on the bearing shell. They flex inwardly when a force is acting on them from the bearing shell. When the bearing cage is installed in the bearing the elastic elements 6 experience a force and flex inward. The elastic elements 6 are under a certain preload or pre tension. This pre load prohibits the axial movement of the bearing cage in the bearing. The pre load provides for a smooth movement of the bearing cage with less axial movement in the bearing.

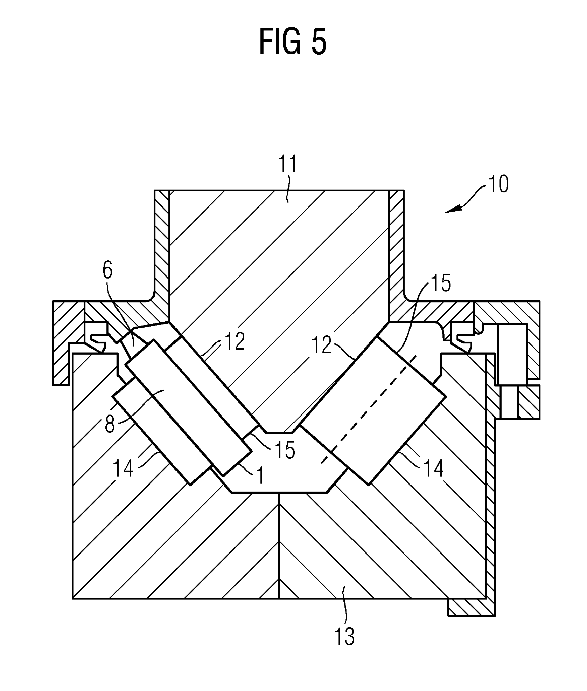

FIG 5 shows a tapered roller bearing with a bearing cage of one of the embodiments.

FIG 5 shows a bearing 10 with a first bearing shell 11 and a second bearing sell 13. The first bearing shell 11 comprises a first surface 12 and the second bearing shell 13 comprises a second surface 14.

Between the first and the second bearing shells 11, 13 rolling elements 15 are arranged. In this embodiment the bearing is a tapered roller bearing. The rolling elements 15 are rollers that are arranged in a certain angel towards each other. At one of the rollers a bearing cage 1 is shows. The cross-bar 8 of the bearing cage 1 can be seen, which leads along the roller 15. The bearing cage comprises an elastic element 6 at one of its sides. The elastic element 6 abuts on a part of the bearing. This minimizes the axial movement of the bearing cage 7. An axial movement in this case is a movement with an axial component, whereby axial is in the direction of the axis of rotation of the rolling elements 15.

When the elastic element 6 is flexing towards the frame of the bearing cage 7 is under a certain pre load. This preload avoids jerky movements of the bearing cage 7. This leads to a lower friction and less wear in the bearing 10.

## Claims

1. Bearing (10) comprising
- a first bearing shell (11) with a first surface (12),
- a second bearing shell (13) with a second surface (14),
- at least one rolling element (15), that is arranged between the bearing shells (11, 13) in a way, that the rolling element (15) is in contact with a part of the first surface (12) and while the rolling element (15) is in contact with a part of the second surface (14) when the bearing (10) is used,
- a bearing cage (1) which is prepared to maintain a certain predetermined distance between two adjacent rolling elements (15) and to guide the rolling elements (15) in the bearing (10),
- wherein the bearing cage (1) comprises a frame (2) that is prepared to at least partially surround a rolling element (15) of a bearing (10),
- wherein the frame (2) comprises at least two cross-bars (3) and at least two side-bars (4),
- wherein the side-bars (4) connect the cross-bars (3),
- wherein the frame (2) comprises an elastic element (5, 6), that is arranged and prepared to deform elastically when a force is acting on the bearing cage (1) due to the movement of the rolling elements (15) in the bearing (10).

2. Bearing (10) according to claim 1, wherein the elastic element (5, 6) is prepared to provide a certain pre-load to reduce at least a part of the force and to stabilize the position of the bearing cage (1) in the bearing (10).

3. Bearing (10) according to one of the claims 1 or 2, wherein at least one side-bar (4) comprises the elastic element (6) to counteract axial forces acting between the bearing (10) and the bearing cage (1) and to provide a certain preload in axial direction of the bearing to reduce an axial movement of the bearing cage (1) relative to the bearing shells (11, 13).

4. Bearing (10) according to one of the claims 1 or 2, wherein the frame (1) comprises the elastic element (6) to counteract radial forces acting on the bearing cage (1) and to provide a certain preload in radial direction of the bearing (10) to reduce a radial movement of the bearing cage (1) relative to the bearing shells (11, 13).

5. Bearing (10) according to one of the claims 1 or 2, wherein at least one cross-bar (3) comprises the elastic element (5) to counteract tangential forces acting between two adjacent bearing cages (1) and to provide a certain preload between two adjacent bearing cages (1) of the bearing (10) to minimize a tangential movement of the bearing cages (1) relative to each other.

6. Bearing (10) according to claim 5, wherein the frame (2) comprises a gap (7) and at least a part of the cross-bar (3) is acting as an elastic element (5).

7. Bearing (10) according to one of the claims 5 or 6, wherein the side-bar (4) of the bearing cage (1) comprises a constriction (7) to enhance the elasticity of the elastic element (5).

8. Bearing (10) according to one of the preceding claims, wherein the bearing cage (1) is molded with a thermoplastic material.

9. Bearing (10) according to one of the preceding claims, wherein the bearing (1) is a roller bearing.

10. Bearing (10) according to one of the preceding claims, wherein the bearing (1) is a tapered bearing.

11. Bearing cage (1) for rolling elements (15) in a bearing (10) according to one of the claims 1 to 10,
- wherein the bearing cage (1) comprises a frame (2) that is prepared to at least partially surround a rolling element (15) of a bearing (10), to guide the rolling element (15) in a bearing (10) and to maintain a certain predetermined distance between two adjacent rolling elements (15),
- wherein the frame (2) comprises at least two cross-bars (3) and at least two side-bars (4),
- wherein the side-bars (4) connect the cross-bars (3) at their ends,
- wherein the frame (2) is prepared to at least partially surround at least one rolling element (15),
- wherein the frame (2) comprises an elastic element (5, 6), that is arranged and prepared to deform elastically when a force is acting on the elastic element (5, 6).

12. Wind turbine comprising a bearing (10) according to the claims 1 to 10.

13. Wind turbine according to claim 12, whereby the wind turbine is a direct driven wind turbine.
